# EUROPÄISCHE PATENTSCHRIFT

(11) **EP 2 158 671 B1**
(45) Veröffentlichungstag und Bekanntmachung des Hinweises auf die Patenterteilung: **13.04.2011**
(21) Anmeldenummer: 07722678.5
(22) Anmeldetag: 20.06.2007
(51) Int. Cl.: H02M 7/48, H02J 3/38

(54) **TRAFOLOSE WECHSELRICHTEREINHEIT FÜR DÜNNFILM-SOLARPANEELE**
INVERTER UNIT WITHOUT TRANSFORMER FOR THIN-FILM SOLAR PANELS
UNITÉ DE REDRESSEUR SANS TRANSFORMATEUR POUR PANNEAUX SOLAIRES EN FILM MINCE

(43) Veröffentlichungstag der Anmeldung: 03.03.2010
(73) Patentinhaber: Powerlynx A/S, 6400 Sonderborg (DK)
(72) Erfinder: BORUP, Uffe, DK-670 Sydals (DK)
(74) Vertreter: Knoblauch, Andreas
(86) Internationale Anmeldenummer: PCT/DK2007/000301
(87) Internationale Veröffentlichungsnummer: WO 2008/154918

(56) Entgegenhaltungen:
- EP-A- 1 271 742
- DE-A1-102004 037 446
- US-A- 6 104 624
- US-A1- 2007 034 246

## Beschreibung

Die Erfindung betrifft eine Wechselrichtereinheit für Solarzellen.

Bei herkömmlichen Solarzellenanlagen muss der Gleichstrom, der von den Solarzellen abgegeben wird, in einen Wechselstrom mit einer dem zu speisenden Versorgungsnetz entsprechenden Spannung und Frequenz umgewandelt werden. Dies geschieht typisch in elektronischen Wechselrichtereinheiten, auch Invertern genannt. Eine solche Photovoltaikanlage kann eine Vielzahl von Solarzellen und/oder eine Vielzahl von Invertern umfassen. Einzelne Solarzellen werden typisch zu sogenannte Strings in Reihe geschaltet, um die Eingangsspannungen an den Invertern zu erhöhen, welches zur Verminderung der elektrischen Verluste in den Inverter schaltungen beiträgt. Die Ausgangsspannungen der Strings können je nach Anlagentyp bis über 1000 V betragen. Gleichzeitig muss aber auch sichergestellt werden, dass Personen oder Anlagenteile nicht durch die hohen Spannungen gefährdet werden. Deshalb müssen Photovoltaikanlagen typisch behördliche Auflagen erfüllen, die unter Anderem Obergrenzen für elektrische Potentialunterschiede gegenüber dem Erdpotential an den einzelnen Anlagenteilen festlegen. Dies gilt insbesondere für Teile, die für Personen direkt oder indirekt, z.B. wenn elektrisch leitende Verbindungen durch Verschmutzung oder Feuchtigkeit aufgebaut werden, zugänglich sind. Anlagenteile, die hohe Potentialunterschiede zur Erde aufweisen können, wie z.B. die Solarzellen, werden daher typisch von der Umgebung elektrisch isoliert, indem sie zu Solarpaneele zusammengebaut und in Gehäuse eingebaut werden, die sowohl elektrisch isolierend als auch dicht gegenüber Feuchtigkeit sind. Es ist weiter bekannt, den Plus- oder Minuspol der Solarzellenstrings mit der Erde zu verbinden, damit die Potentialunterschiede nicht z.B. durch kapazitive Effekte weiter ansteigen. Dies ist jedoch im Allgemeinen nur dann erforderlich, wenn der Invertereingang potentialfrei ist, wie es z.B. bei Invertern, die mit galvanisch trennenden Transformatoren aufgebaut sind, typisch der Fall ist. Viele andere Invertertypen haben, bedingt durch ihren Aufbau und den Anschluss an das Versorgungsnetz, vorgegebene Potentiale oder Potentialgrenzen an ihren Eingängen.

Es hat sich nun gezeigt, dass sich an bestimmten Typen von Solarzellenpaneelen, insbesondere an Dünnfilmpaneelen, und insbesondere an Dünnfilmpaneelen der so genannten Superstrate-Konfiguration, Korrosionsschäden bilden können. Bei dieser Konfiguration bildet eine Glasscheibe gleichzeitig die Vorderseite des Paneels und den Träger für die Halbleiterstrukturen der photovoltaischen Zellen. Der Grund ist wahrscheinlich in Ionen- oder Elektronenwanderungen im Glas zu suchen, aber die exakten Hintergründe für die Bildung der Korrosionsschäden sind noch nicht bekannt. Es hat sich jedoch gezeigt, dass die Schäden sich schneller und/oder verstärkt ausbilden, wenn die Solarzellen negative elektrische Potentiale zur Erde, bzw. zu metallischen Teilen des Gehäuses aufweisen. Die Hersteller solcher Paneele empfehlen deshalb den Einsatz von Invertern mit galvanisch trennenden Transformatoren sowie die gleichzeitige Erdung des negativen Pols der Solarzellenstrings. Solche Inverter sind jedoch typisch schwerer und bauen größer als transformatorlose Inverter, wodurch einerseits die Herstell- und Installationskosten ansteigen, und andererseits der Platzbedarf für die Inverter vergrößert wird. Sie sind außerdem komplizierter im Aufbau und weniger effektiv.

In US 2007/0034246 A1 ist eine Leistungserzeugungseinheit beschrieben, wobei eine Vielzahl von Solarpaneelen über Schalteinrichtungen an einem Wechselrichter angeschlossen sind. Je nach Ausgangsspannung der einzelnen Solarpaneele werden die Solarpaneele untereinander mithilfe der Schalteinrichtung entweder parallel oder in Reihe geschaltet, so dass eine nahezu konstante Ausgangsspannung am Wechselrichter angelegt werden kann. Damit soll ein sehr einfacher elektrischer Schaltkreis ermöglicht werden, wobei auf einen Hochsteller verzichtet werden kann, wodurch das System vielseitig und flexibel wird.

In EP 1 271 742 A2 ist ein System zum Verbinden einer elektrischen Stromerzeugung und ein Verfahren zum Steuern dieser Stromerzeugung offenbart, wobei mithilfe von Solarpaneelen eine elektrische Spannung erzeugt wird. Diese Spannung liegt an einem positiven und einem negativen Eingangsanschluss einer elektrischen Einrichtung an, die einen Hochsetzsteller und einen Wechselrichter aufweist. Es ist nicht erkennbar, ob an Eingängen des Wechselrichters im Betrieb eine gegenüber dem Erdpotential negative und positive Spannung aufgebaut wird.

Aufgabe der Erfindung ist, einen transformatorlosen Inverter zu schaffen, der mit Dünnfilmpaneelen, und insbesondere mit Dünnfilmpaneelen der Superstrate-Konfiguration, verwendet werden kann, ohne vermehrt oder verstärkt Korrosionsschäden zu verursachen. Dies wird an einer transformatorlosen Wechselrichtereinheit mit einem einseitigen Hochsetzsteller und einem Wechselrichter, wobei die Eingänge des Wechselrichters im Betrieb Spannungen tragen, die in etwa symmetrisch um das Erdpotential sind, dadurch erreicht, dass der positive Solarzellenanschluss direkt mit dem positiven Eingang des Wechselrichters verbunden und der Hochsetzsteller in die Verbindung zwischen dem negativen Solarzellenanschluss und dem negativen Eingang des Wechselrichters geschaltet werden. Da der positive Solarzellenanschluss somit ein Potential hat, das im vergleich zum Erdpotential positiv ist, wird bei niedrigen Solarzellenspannungen der negative Solarzellenanschluss ein nur wenig negatives oder sogar positives Potential haben. Da die Ausgangsspannung einer Solarzelle die überwiegende Zeit relativ niedrig ist, und die Wechselrichtereinheit gleichzeitig nach der maximal auftretenden Ausgangsspannung der Solarzelle ausgelegt werden muss, werden die Zeiträume, in denen die Solarzellen ein negatives Potential haben, kräftig reduziert. Hierdurch wird die Förderung oder die Beschleunigung der Bildung von Korrosionsschäden an angeschlossenen Solarpaneelen verringert, auch wenn diese als Dünnfilmpaneele oder Superstrate-Dünnfilmpaneele ausgelegt sind.

Bevorzugterweise wird der Hochsetzsteller so gesteuert, dass die Spannung am negativen Solarzellenanschluss positiv ist im Vergleich zu einer vorgegebenen Spannung.. Hierdurch verringert sich das maximal auftretende negative Potential an den Solarzellen, und die Förderung oder Beschleunigung der Korrosion wird entsprechend geringer.

Bevorzugterweise wird der Hochsetzsteller so gesteuert, dass die Spannung am negativen Solarzellenanschluss nicht negativ ist im Vergleich zum Erdpotential. Hierdurch wird das Risiko noch weiter verringert, dass negative Potentiale an den Solarzellen auftreten, und die Förderung oder Beschleunigung der Korrosion nimmt noch weiter ab.

Es wird weiter bevorzugt, die Wechselrichtereinheit mit einem bipolaren Zwischenkreis zu versehen. Dadurch verringern sich die Rippelspannungen, die an den Solarzellenanschlüssen auftreten, wodurch die durch kapazitive Kopplung hervorgerufene Ströme zwischen den Solarzellen und der Erde, z.B. durch das Glas, abnehmen. Hierdurch wird die Korrosion weiter gemindert.

Bevorzugterweise schließt die Wechselrichtereinheit die Solarzellenanschlüsse kurz, wenn das Potential am negativen Solarzellenanschluss eine vorgegebene Spannung unterschreitet. Hierdurch verringert sich das maximal auftretende negative Potential an den Solarzellen, und die Förderung oder Beschleunigung der Korrosion wird entsprechend geringer.

Bevorzugterweise wird, wenn die Wechselrichtereinheit einen Verbraucher versorgt, der Hochsetzsteller so gesteuert, dass die von den Solarzellen entnommene Leistung gedrosselt wird, wenn der Verbraucher weniger Leistung von der Wechselrichtereinheit verlangt. Hierdurch wird verhindert, dass Speicherkondensatoren in der Wechselrichtereinheit in dieser Situation zu weit aufgeladen werden.

Es wird weiter bevorzugt, dass die Wechselrichtereinheit die Solarzellenanschlüsse kurzschließt, wenn sie vorhersehen kann, dass das Potential am negativen Solarzellenanschluss aufgrund einer Drosselung der von den Solarzellen entnommenen Leistung negativ im Vergleich zum Erdpotential werden kann. Hierdurch wird das Risiko noch weiter verringert, dass negative Potentiale an den Solarzellen auftreten, und die Förderung oder Beschleunigung der Korrosion nimmt noch weiter ab.

Es wird weiter bevorzugt, dass die Wechselrichtereinheit den Kurzschluss zwischen den Solarzellenanschlüssen erst dann aufhebt, wenn der Strom durch den Kurzschluss so weit abgenommen hat, dass auszuschließen ist, dass beim Entfernen des Kurzschlusses ein negatives Potential an den Solarzellen entsteht. Hierdurch wird das Risiko noch weiter verringert, dass negative Potentiale an den Solarzellen auftreten, und die Förderung oder Beschleunigung der Korrosion nimmt noch weiter ab.

Die Erfindung wird im Folgenden anhand der Zeichnungen erklärt. Dabei zeigt:
- Fig. 1: eine schematische Darstellung einer Solarzellenanlage mit einer Wechselrichtereinheit nach einer ersten Ausführungsform der Er- findung, und
- Fig. 2: eine schematische Darstellung eines Hochsetzstellers, der Teil der in Fig. 1 dargestellten Wechselrichtereinheit ist, und
- Fig. 3: eine schematische Darstellung einer Schutzschaltung, die Teil der in Fig. 1 dargestellten Wechselrichtereinheit ist.

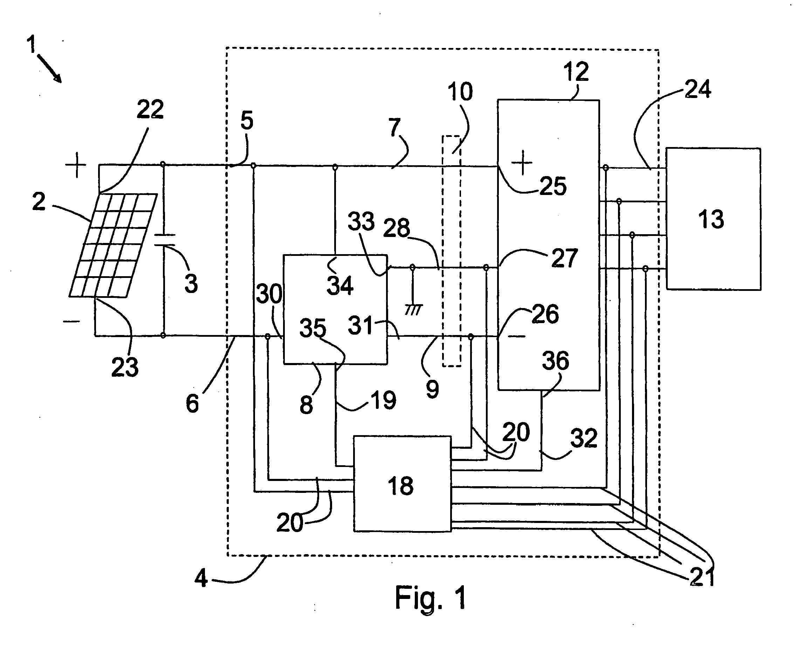

Die in Fig. 1 schematisch dargestellte Solarzellenanlage 1 umfasst ein Solarpaneel 2 und eine dreiphasige Wechselrichtereinheit 4. Ein positiver Anschluss 22 des Solarpaneels 2 ist mit einem positiven Eingangsanschluss 5 der Wechselrichtereinheit 4 verbunden, ein negativer Anschluss 23 des Solarpaneels 2 ist mit einem negativen Eingangsanschluss 6 der Wechselrichtereinheit 4 verbunden, und ein elektrischer Kondensator 3 ist parallel zum Solarpaneel 2 mit dessen beiden Anschlüssen 22, 23 verbunden. Der Kondensator 3 kann nahe dem Solarpaneel 2, nahe der Wechselrichtereinheit 4 oder als integrierter Teil der Wechselrichtereinheit 4 angeordnet werden. Ein vierpoliger Ausgangsanschluss 24 der Wechselrichtereinheit 4 ist mit einem dreiphasigen Wechselstromnetz 13 verbunden. Er könnte auch mit einem anderen Typ von Verbraucher verbunden sein, wie z.B. einem synchronen Elektromotor. Die Wechselrichtereinheit 4 umfasst einen Hochsetzsteller 8, auch Booster genannt, einen Zwischenkreis 10, einen dreiphasigen Wechselrichter 12 und eine Steuereinheit 18. Innerhalb der Wechselrichtereinheit 4 ist der positive Eingangsanschluss 5 über eine positive Busleitung 7 mit einem positiven Anschluss 34 des Hochsetzstellers 8 und einem positiven Gleichstromanschluss 25 des Wechselrichters 12 verbunden. Entstörfilter, Strommessschaltungen etc. können entlang der positiven Busleitung 7 vorgesehen sein; entscheidend ist jedoch, dass selbst bei starken Strömen die Verbindung vom positiven Eingangsanschluss 5 zum positiven Gleichstromanschluss 25 des Wechselrichters 12 im Wesentlichen ohne Spannungsverluste bleibt, da sonst in den entsprechenden Komponenten Verlustleistungen entstehen würde, die die Effizienz der Wechselrichtereinheit 4 negativ beeinflussen könnte. Entsprechendes gilt für die unten genannten weiteren Busleitungen 9, 28. Der negative Eingangsanschluss 6 ist mit einem negativen Eingang 30 des Hochsetzstellers 8 verbunden, und ein negativer Ausgang 31 des Hochsetzstellers 8 ist über eine negative Busleitung 9 mit einem negativen Gleichstromanschluss 26 des Wechselrichters 12 verbunden. Ein neutraler Ausgang 33 des Hochsetzstellers 8 ist mit der Erde und über eine neutrale Busleitung 28 mit einem neutralen Gleichstromanschluss 27 des Wechselrichters 12 verbunden. Die Busleitungen 7, 9, 28 bilden dabei den Zwischenkreis 10, der Aufgrund seines Aufbaus mit einer positiven, einer negativen und einer neutralen Busleitung 7, 9, 28 im Allgemeinen als bipolar bezeichnet wird. Die Erdung des Zwischenkreises kann auch über den Nullleiter im Ausgangsanschluss 24 und eine externe Erdverbindung erfolgen. Ein Steuereingang 35 des Hochsetzstellers 8 ist über eine Steuerleitung 19 mit der Steuereinheit 18 verbunden. Ein Steuereingang 36 des Wechselrichters 12 ist über eine Steuerleitung 32 mit der Steuereinheit 18 verbunden. Die Steuereinheit 18 ist über Sensorleitungen 20 mit dem positiven Eingangsanschluss 5 (und dadurch mit der positiven Busleitung 7), mit dem negativen Eingangsanschluss 6, mit der negativen Busleitung 9 und mit der Erde verbunden. Die Steuereinheit 18 ist über weitere Sensorleitungen 21 mit dem Ausgangsanschluss 24 des Wechselrichters 12 verbunden. Die Steuereinheit 18 misst über die Sensorleitungen 20, 21 die aktuellen Spannungen an den damit verbundenen Leitungen. Über entsprechende, nicht dargestellte Strommessschaltungen, die mit denselben Leitungen verbunden sind, misst die Steuereinheit 18 die aktuellen Ströme durch die Leitungen. Die Steuereinheit 18 kann von dem Zwischenkreis 10 und/oder aus dem Stromnetz 13 über entsprechende Stromversorgungsschaltungen versorgt werden. Die Wechselrichtereinheit 4 umfasst darüber hinaus eine Reihe von Schaltungen, wie z.B. Entstörfilter und Überspannungsschutzschaltungen am Ein- und Ausgang, weitere Schaltungen zur Erfassung von Strömen und Spannungen, Sicherheitsschalter sowie eine Bedienerschnittstelle, die jedoch alle nicht dargestellt sind.

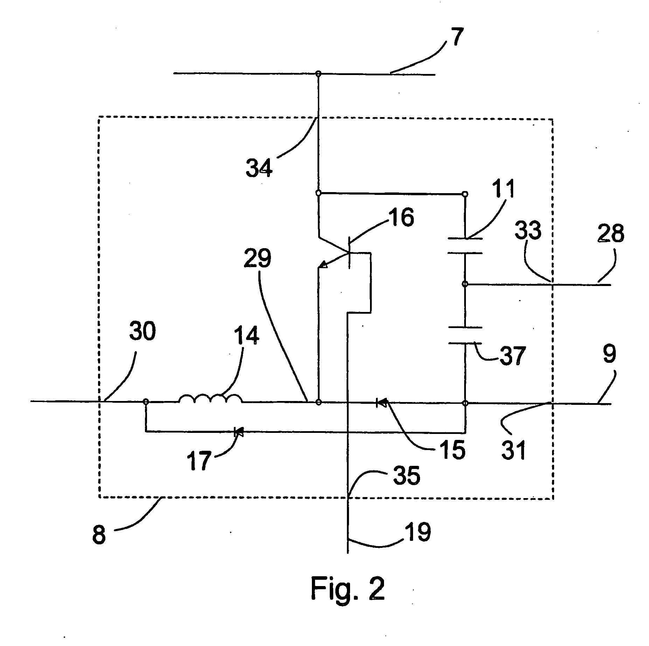

Der in Fig. 2 schematisch dargestellte Hochsetzsteller 8 umfasst ein erster Speicherkondensator 11, der zwischen dem positiven Anschluss 34 und dem neutralen Ausgang 33 geschaltet ist, ein zweiter Speicherkondensator 37, der zwischen dem negativen Ausgang 31 und dem neutralen Ausgang 33 geschaltet ist, eine elektrische Spule 14, die zwischen dem negativen Eingang 30 und einem Knoten 29 geschaltet ist, eine erste Diode 15, deren Anode mit dem negativen Ausgang 31 und deren Kathode mit dem Knoten 29 verbunden ist, ein Transistor 16, dessen Kollektor mit dem positiven Anschluss 34, dessen Emitter mit dem Knoten 29 und dessen Basis mit dem Steuereingang 35 verbunden ist, sowie eine zweite Diode 17, deren Anode mit dem negativen Ausgang 31 und deren Kathode mit dem negativen Eingang 30 verbunden ist. Als Transistor 16 kann mit Vorteil ein MOS-FET oder IGBT (bipolarer Transistor mit isolierter Gate) verwendet werden, weil die Verluste durch das Schalten hierdurch reduziert werden können. Als Dioden 15, 17 können gewöhnliche Dioden oder Siliziumkarbiddioden (SiC) verwendet werden.

Der Wechselrichter 12 ist in bereits bekannter Weise Aufgebaut und mit Dioden versehen, über die die Speicherkondensatoren 11, 37 des Hochsetzstellers 8 aus dem Stromnetz 13 geladen werden können, weshalb der Zwischenkreis im normalen Betrieb Spannungen trägt, die in etwa den Spitzenspannungen des Stromnetzes 13 entsprechen. Beträgt die Effektivspannung im Stromnetz 13 z.B. 240 V, dann tragen die positive Busleitung 7 eine Gleichspannung von etwa +400 V (die positive Zwischenkreisspannung) und die negative Busleitung 9 eine Gleichspannung von etwa -400 V (die negative Zwischenkreisspannung). Den Zwischenkreisspannungen ist eine Rippelspannung überlagert, deren Spannung und Frequenz deutlich von dem Aufbau und der Dimensionierung des Zwischenkreises 10, zum Teil aber auch von der durch den Wechselrichter 12 ausgeübte Belastung, abhängen. Bei einem unipolaren Zwischenkreis 10, das heißt, bei einem Zwischenkreis 10 ohne neutrale Busleitung 28, gleicht die Grundfrequenz der Rippelspannung der Grundfrequenz des Stromnetzes 13, und die Amplitude der Rippelspannung beträgt etwa die Hälfte der Spitzenspannung im Stromnetz 13. Wird stattdessen ein bipolarer Zwischenkreis 10 verwendet, so steigt die Grundfrequenz der Rippelspannung an das zweifache, und die Amplitude verringert sich erheblich, z.B. auf 20% oder weniger. Bei einem dreiphasigen Wechselrichter 12 ist die Amplitude der Rippelspannung zudem weit geringer als bei einem einphasigen Wechselrichter 12, und die Grundfrequenz der Rippelspannung steigt an das dreifache. Wird die in Fig. 1 gezeigte Wechselrichtereinheit 4 mit bipolarem Zwischenkreis 10 und dreiphasigem Wechselrichter 12 beispielweise an einem Stromnetz 13 mit einer Effektivspannung von 240 V und einer Grundfrequenz von 50 Hz betrieben, so beträgt die Grundfrequenz der Rippelspannung 150 Hz und die Amplitude etwa 20 V oder weniger.

Die Ausgangsspannungen der Solarzellen im Solarpaneel 2 variieren über die Zeit aufgrund von externen Faktoren, wie z.B. Schwankungen der Sonneneinstrahlung, der Paneelabschattung und der Paneeltemperatur. Die Anzahl der Solarzellen in den einzelnen Strings ist so bemessen, dass die Strings, bzw. das Solarpaneel 2 die überwiegende Zeit eine Ausgangsspannung abgeben, die niedriger ist als die Zwischenkreisspannung. Die Aufgabe des Hochsetzstellers 8 ist, die variierende Ausgangsspannung des Solarpaneels 2 in eine möglichst konstante, bipolare Zwischenspannung im Zwischenkreis 10 zu wandeln. Dies wird im Hochsetzsteller 8 dadurch erreicht, dass der Transistor 16 mit einer hohen Schaltfrequenz, z.B. zwischen 10 kHz und 70 kHz, zyklisch ein- und ausgeschaltet wird. Wenn der Transistor 16 eingeschaltet ist, fließt der Strom von dem positiven Anschluss 22 des Solarpaneels 2 durch den Transistor 16 und weiter durch die Spule 14 an den negativen Anschluss 23 des Solarpaneels 2 zurück. Die erste Diode 15 sorgt dabei dafür, dass die Speicherkondensatoren 11, 37 nicht durch den Transistor 16 entladen werden. Die erste Diode 15 kann alternativ durch einen getakteten Transistor ersetzt werden, der immer dann eingeschaltet wird, wenn der Transistor 16 ausgeschaltet ist. Dieses Verfahren ist als synchrones Gleichrichten bekannt. Wenn der Transistor 16 wieder ausgeschaltet wird, fließt der Strom aufgrund der Induktivität der Spule 14 weiter, wobei die elektrische Energie an die Speicherkondensatoren 11, 37 und den Wechselrichter 12 abgegeben wird. Dabei wirkt der parallel zum Solarpaneel 2 geschaltete Kondensator 3 mit der Spule 14 zusammen als Filter, das die durch das Schalten des Transistors 16 hervorgerufene Wechselspannung größtenteils vom Solarpaneel 2 fernhält. Ist der Kondensator 3 nicht vorhanden, so reicht die aufbaubedingte Kapazität der Solarzellen unter Umständen aus, um dieselbe Funktion auszuüben. Die zweite Diode 17 entlastet die Spule 14 in dem Falle, dass die Ausgangsspannung des Solarpaneels 2 der Zwischenkreisspannung übersteigt, z.B. bei maximaler Sonneneinstrahlung bei sehr niedrigen Paneeltemperaturen oder beim Hochfahren der Wechselrichtereinheit 4. Das Funktionsprinzip des Hochsetzstellers 8 ist allgemein bekannt und wird hier deshalb nicht weiter erklärt. Der Wechselrichter 12 wandelt in ebenfalls allgemein bekannter weise die Gleichspannungen an den Busleitungen 7, 9, 28 in eine Wechselspannung um, die in das Stromnetz 13 gespeist wird. Die Leistungsabnahme des Wechselrichters 12 in das Stromnetz 13 wird dabei über die Steuerleitung 32 von der Steuereinheit 18 anhand von aktuell gemessenen Zwischenkreisspannungen und Stromnetzspannungen gesteuert.

Solarzellen, Solarpaneele oder ganze Solarzellenstrings werden unter Anderem nach dem Verlauf ihrer Ausgangsspannung bei variierendem Strom charakterisiert. Diese sogenannte U/I-Kennlinie ändert sich mit der Sonneneinstrahlung, der Paneelabschattung und der Paneeltemperatur, hat jedoch eine in etwa gleichbleibende Form. Wenn kein Strom von den Zellen abgenommen wird, gleicht die Ausgangsspannung der Leerlaufspannung. Bei zunehmendem Strom nimmt die Ausgangsspannung nur langsam ab, bis eine gewisse Stromschwelle erreicht wird. Bei weiterem Erhöhen des Stromes nimmt die Ausgangsspannung zunehmend schneller ab und sinkt letztendlich auf null ab, wobei die Zellen dann einen Kurschlussstrom abgeben. Durch diese Form der Kennlinie ergibt sich ein Punkt auf der Kennlinie, wo die aus den Zellen entnommene Leistung am höchsten ist. Dieser Punkt wird allgemein bekannt mit "Maximum Power Point" oder MPP, die Spannung im Punkt entsprechend mit MPP-Spannung und der Strom mit MPP-Strom bezeichnet. Sowohl die Leerlaufspannung als auch der Kurschlussstrom sind nicht viel größer, typisch nur 10% bis 30%, als die MPP-Spannung, bzw. der MPP-Strom.

Durch Abänderung des Verhältnisses zwischen Einschalt- und Ausschaltperioden des Transistors 16 (Pulsbreitensteuerung) verändert die Steuereinheit 18 die Stromentnahme aus dem Solarpaneel 2, und steuert somit auch die Ausgangsspannung des Solarpaneels 2. Der MPP und die MPP-Spannung ändern sich mit den weiter oben beschriebenen umgebungsbedingten Variationen der Kennlinie. Solange die MPP-Spannung nicht höher ist als die positive Zwischenkreisspannung, regelt die Steuereinheit 18 die Stromentnahme so, dass das Solarpaneel 2 in ihrem MPP betrieben wird, wodurch die Photovoltaikanlage die größtmögliche Leistung an das Stromnetz 13 abgeben kann. Die Steuereinheit 18 führt die Regelung auf der Basis von Messsignalen, die über den vom Solarpaneel 2 abgegeben Strom und die Spannung Aufschluss geben, durch. Der Fachmann findet hierzu leicht zahlreiche bekannte Verfahren. Übersteigt die MPP-Spannung hingegen die positive Zwischenkreisspannung, so erhöht die Steuereinheit 18 die Stromentnahme, bis die Ausgangsspannung des Solarpaneels 2 der positiven Zwischenkreisspannung gleicht. Betragen die Zwischenkreisspannungen z.B. +400 V, bzw. -400 V, und hat das Solarpaneel 2 eine Leerlaufspannung von z.B. 600 V, so setzt der Hochsetzsteller 8 in jedem Falle die Ausgangsspannung des Solarpaneels 2 durch Belastung desselben so weit herab, dass die Ausgangsspannung 400 V oder weniger beträgt. Da durch die Erdung der neutralen Busleitung 28 das erdbezogene Potential am positiven Anschluss 22 des Solarpaneels 2 stets der positiven Zwischenkreisspannung entspricht, ist somit sichergestellt, dass das Potential am negativen Anschluss 23 des Solarpaneels 2 nicht negativ gegenüber dem Erdpotential wird. Somit wird eine Zunahme oder eine Beschleunigung der Bildung von Korrosionsschäden an angeschlossenen Solarpaneelen 2 vermieden, auch wenn diese als Dünnfilmpaneele oder Superstrate-Dünnfilmpaneele ausgelegt sind.

In Photovoltaikanlagen 1 müssen die Wechselrichtereinheiten 4 so ausgelegt sein, dass sie die maximal mögliche Ausgangsspannung der Solarpaneele 2 ohne Schäden vertragen. Es kommt jedoch unter normalen Betriebsbedingungen nur sehr selten vor, z.B. nur bei starker Kälte mit gleichzeitiger voller Sonneneinstrahlung, dass die tatsächliche Ausgangsspannung den Maximalwert erreicht. Die weit überwiegende Zeit beträgt die Ausgangsspannung eines Solarpaneels 2 weniger als 2/3 des Maximalwerts. Ein Solarpaneel 2 mit einer maximalen Leerlaufspannung von z.B. 600 V kann somit an einer Wechselrichtereinheit 4 nach der Erfindung mit Zwischenkreisspannungen von ±400 V betrieben werden, ohne dass die automatische Minderung der Paneelspannung auf 400 V eine nennenswerte Herabsetzung der gesamten von der Anlage 1 gelieferten Energie verursacht.

Es können Situationen vorkommen, in denen das Stromnetz 13 der Wechselrichtereinheit 4 keine oder nur eine geringe Leistung abnehmen kann oder darf, z.B. wenn die Wechselspannungen im Stromnetz 13 höher sind als eine vorgegebene Maximalspannung. In diesem Fall kann oder darf der Wechselrichter 12 keine oder nur wenig Leistung dem Zwischenkreis 10 entnehmen. Die entsprechende Steuerung des Wechselrichters 12 erfolgt durch die Steuereinheit 18. Um zu verhindern, dass die Speicherkondensatoren 11, 37 dabei zu weit aufgeladen werden, und damit die Zwischenkreisspannungen zu weit ansteigen, setzt dann die Steuereinheit 18 durch entsprechende Steuerung des Hochsetzstellers 8 die Stromabnahme aus dem Solarpaneel 2 herab. Dadurch steigt aber die Ausgangsspannung des Solarpaneels 2. Steigt sie so weit an, dass die Spannung am negativen Anschluss 23 des Solarpaneels 2 gegenüber dem Erdpotential negativ wird, wodurch eine verstärkte Korrosion könnte hervorgerufen werden, dann erfährt die Steuereinheit 18 dies über die Sensorleitungen 20, und schaltet den Transistor 16 dauerhaft ein. Hierdurch fällt die Ausgangsspannung des Solarpaneels 2 gegen null ab, während der Strom bis auf den jeweiligen Kurzschlussstrom ansteigt. Beide Anschlüsse 22, 23 des Solarpaneels 2 sind dann positiv gegenüber dem Erdpotential. Die in dem Transistor 16 abgesetzte Leistung ist aufgrund des niedrigen Spannungsabfalls über den Transistor 16 relativ gering, sodass die Wechselrichtereinheit 4 ohne Schäden in diesem Zustand verbleiben kann. Sobald das Stromnetz 13 wieder eine ausreichende Leistung abnehmen kann, oder der Strom durch den Transistor 16 abfällt, z.B. weil eine Wolke die Sonne abschattet, kehrt die Steuereinheit 18 zum weiter oben beschriebenen normalen Regelungsverfahren zurück. Alternativ können die Kennlinien der Solarpaneele 2 in der der Steuereinheit 18 gespeichert werden, sodass die Steuereinheit 18 bei abfallender Leistungsabnahme ins Stromnetz 13 anhand der aktuellen Ausgangsspannung und dem aktuellen Ausgangsstrom des Solarpaneels 2 im Voraus berechnen kann, wann das Kurzschließen des Solarpaneels 2 durch das dauerhafte Einschalten des Transistors 16 erfolgen muss, um ein negatives Potential an den Solarzellen 2 zu verhindern. Somit braucht sie nicht abzuwarten, dass die Spannung am negativen Anschluss 23 des Solarpaneels 2 gegenüber dem Erdpotential negativ wird. Die Steuereinheit 18 kann in entsprechender Weise anhand des aktuellen Kurzschlussstroms berechnen, wann zum normalen Regelungsverfahren zurückgekehrt werden kann. Um ein zu häufiges Umschalten zwischen den Regelungsverfahren zu vermeiden, kann die Steuereinheit 18 Hysteresen in die Entscheidung mit einbeziehen. Die Steuerung des Hochsetzstellers 8 und die Steuerung des Wechselrichters 12 können unabhängig voneinander oder nach einem gemeinsamen Algorithmus erfolgen.

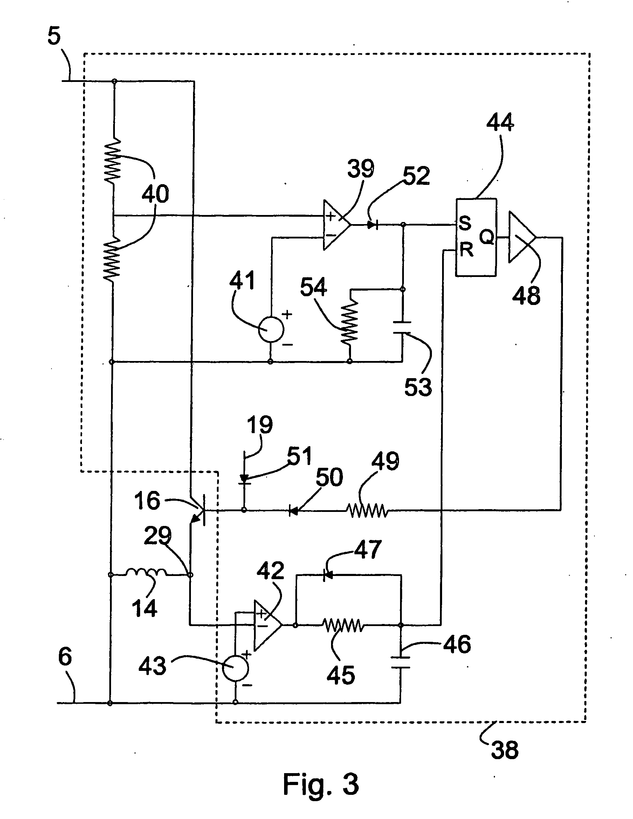

Ein gleichartiger Mechanismus wird benutzt, um zu verhindern, dass die Ausgangsspannung des Solarpaneels 2 so weit ansteigt, dass Schaltelemente in der Wechselrichtereinheit 4, wie z.B. der Transistor 16 oder Transistoren in dem Wechselrichter 12, beschädigt werden können. Erfährt die Steuereinheit 18 über die Sensorleitungen 20, dass sich die Ausgangsspannung des Solarpaneels 2 einer vorgegebenen Abschaltspannung nähert, so schaltet sie den Transistor 16 dauerhaft ein, wodurch das Solarpaneel 2 kurzgeschlossen wird, und seine Ausgangsspannung gegen null abfällt. Erst wenn der Strom durch den Transistor 16 so weit abgefallen ist, dass anhand der Kennlinie erkennbar ist, dass die Gefahr einer Überspannung gebannt ist, kehrt die Steuereinheit zum normalen Regelungsverfahren zurück. Auch hier kann eine Hysterese in die Entscheidungen mit einfließen. Das Speichern der Kennlinien der Solarpaneele 2 kann z.B. ein Teil der Arbeiten bei der Installation der Solarzellenanlage 1 sein. Um sicherzustellen, dass auch bei nicht funktionierender Steuereinheit 18 keine Beschädigungen durch Überspannungen entstehen können, ist die Wechselrichtereinheit 4 zusätzlich mit einer Schutzschaltung 38 versehen, die, wenn die Spannung zwischen dem positiven Eingangsanschluss 5 und dem negativen Eingangsanschluss 6 eine erste vorgegebene Schwelle überschreitet, den Transistor 16 einschaltet und erst wieder ausschaltet, wenn der Strom durch den Transistor 16 unterhalb eine zweite vorgegebene Schwelle abgefallen ist. Die Schutzschaltung 38 ist in Fig. 3 schematisch dargestellt, und enthält ein erster Komparator 39, dessen positiver Eingang mit einem 1000:1 Spannungsteiler 40 verbunden ist, der den Spannungsunterschied zwischen dem positiven Eingangsanschluss 5 und dem negativen Eingangsanschluss 6 herunterteilt. Der negative Eingang des Komparators 39 ist mit einem Spannungsgenerator 41 verbunden, der eine Spannung von 1 V abgibt. Somit wird der Ausgang des Komparators 39 ein High-Signal abgeben, wenn die Ausgangsspannung des Solarpaneels 2 1000 V übersteigt. Durch die Diode 52, der Kondensator 53 und der Widerstand 54 wird das High-Signal eine gewisse Zeit, z.B. 5 bis 10 s, anstehen, nachdem die Ausgangsspannung wieder gefallen ist. Das High-Signal triggert ein S-R-Flipflop 44 an dessen SET-Eingang. Der Ausgang des Flipflops 44 zieht dann die Basis (oder das Gate) des Transistors 16 über eine Treiberschaltung 48, einen Widerstand 49 und eine Diode 50 hoch und schaltet hierdurch den Transistor 16 ein. Dieser bleibt in diesem Zustand, bis das Flipflop 44 wieder zurückgesetzt worden ist, und die Steuerleitung 19, die über die Diode 51 ebenfalls mit der Basis des Transistors 16 verbunden ist, kein High-Signal trägt. Der Strom durch den Transistor 16 wird anhand des Spannungsabfalls über der Spule 14 ermittelt. Hierzu ist ein zweiter Komparator 42 vorgesehen, dessen negativer Eingang mit dem Knoten 29 zwischen dem Emitter des Transistors 16 und der Spule 14 verbunden ist, und dessen positiver Eingang mit einem Spannungsgenerator 43 verbunden ist, der eine Spannung von 0,3 V abgibt. Der Ausgang des Komparators 42 ist über einen Widerstand 45 mit einem Kondensator 46 und mit dem RESET-Eingang des Flipflops 44 verbunden. Sinkt die Spannung über die Spule 14 auf weniger als 0,3 V ab, so wird der Kondensator 46 langsam aufgeladen, bis sie die Schwellspannung des Flipflops 44 erreicht, wonach das Flipflop zurückgesetzt wird. Dabei wird der Ausgang auf null gezogen, und der Transistor 16 wird ausgeschaltet, es sei denn, dass die Steuereinheit 18 den Transistor 16 über die Steuerleitung 19 und die Diode 51 eingeschaltet hält. Die Diode 47 sorgt dafür, dass der Kondensator 46 abgeladen wird, sobald die Spannung über die Spule 14 0,3 V übersteigt. Damit ist sichergestellt, dass das Abschalten des Transistors 16 erst eine vorgegebene Mindestzeit, z.B. 10 bis 30 s, nach dem Einschalten des Transistors 16 erfolgen kann, sodass die Solarpaneele 2 und die Schaltungen der Wechselrichtereinheit 4 genügend Zeit haben, auf das Kurzschließen zu reagieren und einen stabilen Zustand zu erreichen, bevor sich die Strommessung auswirkt.

Die Schutzschaltung 38 kann auch in anderen Typen von Leistungswandlern für Solarzellen 2 verwendet werden. So ist es z.B. möglich dass eine elektrische Einrichtung 4 zum Umwandeln eines Gleichstroms aus Solarzellenstrings 2 in mindestens einen elektrischen Strom mit vorgegebener Spannung und Frequenz, hierunter Gleichstrom, dadurch gekennzeichnet wäre, dass beim Erreichen einer vorgegebenen Spannung am Eingang 5, 6 der elektrischen Einrichtung 4 dieser Eingang 5, 6 kurzgeschlossen wird. Sie könnte weiter dadurch gekennzeichnet sein, dass der Kurschluss dann aufgehoben wird, wenn der Strom durch den Eingang 5, 6 eine vorgegebene Schwelle unterschreitet, gegebenenfalls nach einer vorgegebenen Wartezeit. Sie könnte auch durch verschiedene Kombinationen aus Merkmalen der in dieser Patentanmeldung offenbarten Erfindung weiter gekennzeichnet sein, insbesondere die Merkmale der oben beschriebenen Schutzschaltung 38.

Die Verwendung einer transformerlosen Wechselrichtereinheit 4 bringt den weiteren Vorteil mit sich, dass eine im Betrieb durchgeführte Leckstromüberwachung am Nullleiter des Ausgangsanschlusses 24 eine Indikation auf mögliche Fehler, insbesondere Erdungsfehler, an den Solarzellen 2 ergeben kann. Ist die Wechselrichtereinheit 4 nicht im Betrieb, kann eine Messung der Impedanzen der Solarzellenanschlüsse 5, 6 untereinander und gegen Erde ähnliche Fehler entdecken.

Dem Fachmann ist übrigens leicht zu erkennen, dass die hierin beschriebene Erfindung andere Ausführungsformen haben kann. So kann die Wechselrichtereinheit 4 mehrere Eingänge 5, 6 für Solarzellenstrings haben, die parallel an dem Zwischenkreis 10 geschaltet sind. Es können dabei mehr als ein Hochsetzsteller 8 oder mehr als ein Wechselrichter 12 benutzt werden, und der Hochsetzsteller 8 kann ein kombinierter Hoch- und Tiefsetzsteller sein.

## Patentansprüche

1. Elektrische Einrichtung (4) umfassend mindestens einen Eingang mit einem positiven Eingangsanschluss (5) und einem negativen Eingangsanschluss (6), mindestens einen Wechselrichter (12) mit mindestens einem positiven Eingang (25) und mindestens einem negativen Eingang (26), wobei am positiven Eingang (25) des Wechselrichters (12) eine gegenüber dem Erdpotential positive Spannung und am negativen Eingang (26) des Wechselrichters (12) eine gegenüber dem Erdpotential negative Spannung im Betrieb aufgebaut wird, wobei zwischen dem positiven Eingangsanschluss (5) und dem positiven Eingang (25) des Wechselrichters (12) eine im Wesentlichen spannungsverlustfreien Verbindung (7) besteht **dadurch gekenzeichnet, dass** die Einrichtung (4) mindestens einen Hochsetzsteller (8) umfasst, und dass einer der Hochsetzsteller (8) zwischen dem negativen Eingangsanschluss (6) und dem negativen Eingang (26) des Wechselrichters (12) angeordnet ist.

2. Elektrische Einrichtung (4) nach Anspruch 1, **dadurch gekennzeichnet, dass** der Hochsetzsteller (8) durch Belastung des Eingangs (5, 6) der elektrischen Einrichtung (4) die Spannung am negativen Eingangsanschluss (6) so regelt, dass sie positiv ist im Vergleich zu einer vorgegebenen Spannung.

3. Elektrische Einrichtung (4) nach Anspruch 2, **dadurch gekennzeichnet, dass** sie durch Belastung ihres Eingangs (5, 6) die Spannung am negativen Eingangsanschluss (6) so regelt, dass sie nicht negativ im vergleich zum Erdpotential ist.

4. Elektrische Einrichtung (4) nach einem der vorhergehenden Ansprüche, **dadurch gekennzeichnet, dass** sie einen bipolaren Zwischenkreis (10) umfasst.

5. Elektrische Einrichtung (4) nach einem der vorhergehenden Ansprüche, **dadurch gekennzeichnet, dass** die elektrische Einrichtung derart konfiguriert ist, dass sie den positiven Eingangsanschluss (5) mit dem negativen Eingangsanschluss (6) kurzschließt, wenn die Spannung am negativen Eingangsanschluss (6) negativ wird im Vergleich zu einer vorgegebenen Spannung.

6. Elektrische Einrichtung (4) nach einem der vorhergehenden Ansprüche, wobei der Ausgang des Wechselrichters (12) mit einem Verbraucher (13) verbunden ist, **dadurch gekennzeichnet, dass** sie die von ihrem Eingang (5, 6) entnommene Leistung drosselt, wenn der Verbraucher (13) weniger Ausgangsleistung vom Wechselrichter (12) verlangt.

7. Elektrische Einrichtung (4) nach Anspruch 6, **dadurch gekennzeichnet, dass** die elektrische Einrichtung derart konfiguriert ist, dass sie den positiven Eingangsanschluss (5) mit dem negativen Eingangsanschluss (6) kurzschließt, wenn abzusehen ist, dass die Spannung am negativen Eingangsanschluss (6) aufgrund einer Drosselung der vom Eingang (5, 6) der elektrischen Einrichtung (4) entnommene Leistung wird negativ werden im Vergleich zu einer vorgegebenen Spannung.

8. Elektrische Einrichtung (4) nach Anspruch 5 oder 7, **dadurch gekennzeichnet, dass** die elektrische Einrichtung derart konfiguriert ist, dass sie den Kurzschluss erst wieder aufhebt, wenn der Strom durch den Kurzschluss zwischen dem positiven Eingangsanschluss (5) und dem negativen Eingangsanschluss (6) einen vorgegebenen Wert unterschreitet.

## Claims

1. Electrical device (4) comprising at least one input with a positive input connection (5) and a negative input connection (6), at least one inverter (12) with at least one positive input (25) and at least one negative input (26), a positive potential in relation to the earth potential being built up at the positive input (25) of the inverter (12), and a negative potential in relation to the earth potential being built up at the negative input (26) of the inverter (12) during operation, whereby a substantially potential loss free connection (7) exists between the positive input connection (5) and the positive input (25) of the inverter (12), **characterised in that** the device (4) comprises at least one boost converter (8) and that one of the boost converters (8) is arranged between the negative input connection (6) and the negative input (26) of the inverter (12).

2. Electrical device (4) according to claim 1, **characterised in that** by loading the inputs (5, 6) of the electrical device (4) the boost converter (8) controls the potential at the negative input connection (6) in such a way that it is positive in comparison with a pre-specified potential.

3. Electrical device (4) according to claim 2, **characterised in that** by loading its inputs (5, 6) it controls the potential at the negative input connection (6) so that the potential at the negative input connection (6) is not negative in comparison with the earth potential.

4. Electrical device (4) according to one of the previous claims, **characterised in that** it is provided with a bipolar intermediate circuit (10).

5. Electrical device (4) according to one of the previous claims, **characterised in that** the electrical device is configured so as to short-circuit the positive input connection (5) with the negative input connection (6), when the potential at the negative input connection (6) becomes negative in comparison with a pre-specified potential.

6. Electrical device (4) according to one of the previous claims, the output of the inverter (12) being connected to a consumer (13), **characterised in that** the output taken from its input (5, 6) is throttled, when the consumer (13) demands less output from the inverter (12).

7. Electrical device (4) according to claim 6, **characterised in that** the electrical device is configured so as to short-circuit the positive input connection (5) with the negative input connection (6), when it anticipates that the potential at the negative input connection (6) can become negative in comparison with a pre-specified potential because of a throttling of the output taken from the input (5, 6) of the electrical device (4).

8. Electrical device (4) according to claim 5 or 7, **characterised in that** the electrical device is configured so that it does not end the short-circuit until the current through the short-circuit between the positive input connection (5) and the negative input connection (6) has dropped below a pre-specified value.

## Revendications

1. Dispositif électrique (4) comprenant au moins une entrée avec un raccordement d'entrée positif (5) et un raccordement d'entrée négatif (6), au moins un onduleur (12) avec au moins une entrée positive (25) et au moins une entrée négative (26), une tension positive par rapport au potentiel de terre pouvant en fonctionnement être établie à l'entrée positive (25) de l'onduleur (12) et une tension négative par rapport au potentiel de terre pouvant en fonctionnement être établie à l'entrée négative (26) de l'onduleur (12), une liaison (7) essentiellement sans perte de tension étant établie entre le raccordement d'entrée positif (5) et l'entrée positive (25) de l'onduleur (12), **caractérisé en ce que** le dispositif (4) comprend au moins un organe de relèvement de tension (8), et **en ce que** l'un des organes de relèvement de tension (8) est disposé entre le raccordement d'entrée négatif (6) et l'entrée négative (26) de l'onduleur (12).

2. Dispositif électrique (4) selon la revendication 1, **caractérisé en ce que** l'organe de relèvement de tension (8), grâce à une sollicitation de l'entrée (5, 6) du dispositif électrique (4), régule la tension au raccordement d'entrée négatif (6) de manière à ce qu'elle soit positive en comparaison avec une tension prescrite.

3. Dispositif électrique (4) selon la revendication 2, **caractérisé en ce qu'**il régule la tension au raccordement d'entrée négatif (6) grâce à la sollicitation de son entrée (5, 6) de manière à ce qu'elle ne soit pas négative en comparaison avec le potentiel de terre.

4. Dispositif électrique (4) selon l'une des revendications précédentes, **caractérisé en ce qu'**il comprend un circuit intermédiaire bipolaire (10).

5. Dispositif électrique (4) selon l'une des revendications précédentes, **caractérisé en ce que** le dispositif électrique est configuré de manière à ce qu'il court-circuite le raccordement d'entrée positif (5) avec le raccordement d'entrée négatif (6) lorsque la tension au raccordement d'entrée négatif (6) devient négative en comparaison avec une tension prescrite.

6. Dispositif électrique (4) selon l'une des revendications précédentes, dans lequel la sortie de l'onduleur (12) est en liaison avec un récepteur (13), **caractérisé en ce qu'**il réduit la puissance prélevée par son entrée (5, 6) lorsque le récepteur (13) demande moins de puissance de sortie à l'onduleur (12).

7. Dispositif électrique (4) selon la revendication 6, **caractérisé en ce que** le dispositif électrique est configuré de manière à court-circuiter le raccordement d'entrée positif (5) avec le raccordement d'entrée négatif (6) lorsque l'on peut s'attendre à ce que la tension au raccordement d'entrée négatif (6) va devenir négative en raison d'une réduction de la puissance prélevée à l'entrée (5, 6) du dispositif électrique (4) en comparaison avec une tension prescrite.

8. Dispositif électrique (4) selon la revendication 5 ou 7, **caractérisé en ce que** le dispositif électrique est configuré de manière à de nouveau interrompre le court-circuitage seulement lorsque le courant dépasse par le bas une valeur prescrite en raison du court-circuitage entre le raccordement d'entrée positif (5) et le raccordement d'entrée négatif (6).
